# EUROPEAN PATENT APPLICATION

(11) **EP 1 694 082 A1**
(43) Date of publication of application: **23.08.2006**
(21) Application number: 04820301.2
(22) Date of filing: 10.12.2004
(51) Int. Cl.: H04Q 7/22, H04Q 7/34, H04L 12/28

(54) **COMMUNICATION HANDOVER METHOD, COMMUNICATION SYSTEM, COMMUNICATION MESSAGE PROCESSING METHOD, AND COMMUNICATION MESSAGE PROCESSING PROGRAM**

(30) Priority: 11.12.2003 JP 2003413778
(71) Applicant: MATSUSHITA ELECTRIC INDUSTRIAL CO., LTD., Kadoma-shi, Osaka 571-8501 (JP)
(72) Inventor: ASOU, Keigo Matsushita Electric Ind. Co., Ltd., 1-3-7 Shiromi, Chuo-ku Osaka 540-6319 (JP)
(74) Representative: Grünecker, Kinkeldey, Stockmair & Schwanhäusser Anwaltssozietät
(86) International application number: PCT/JP2004/018486
(87) International publication number: WO 2005/057960

(57) **Abstract**

There is disclosed a technique capable of lessening the delay which can occur in a conventional FMIP (fast handover technique) and of reducing packet loss. According to this technique, upon receipt of an FBAck message from a PAR (access router to which a mobile terminal (MN) 10 has a connection before handover) 21 (step S113), an NAR (access router to which the MN makes a connection after the handover) 31 temporarily stores this FBAckmessage (step S119). Moreover, Upon receipt of an FNA message including an FBU message from the MN (step S121), the NAR 31 refers to the FBAck message stored in the step S119 so as to make a collation with the FBU message in the FNA message (step S125) and, if the corresponding FBAck message exists, it transmits a packet, addressed to the MN and buffered, to the MN (step S127).

## Description

### TECHNICAL FIELD

The present invention relates to a communication handover method, communication system, communication message processing method and communication message processing program, capable of lessening delay involved in common handover in the layer 3 and of reducing packet loss.

### BACKGROUND ART

So far, as a technique providing means capable of minimizing the packet loss unpreventable by common layer 3 handover employing a technique based on a mobile IP (referred to hereinafter as MIP) and effective to an internet application requiring the real-time characteristic, there has been known a fast handover technique (Fast Mobile IP: referred to hereinafter as FMIP) (forexample, see the following non-patent document 1). The FMIP will be described hereinbelow with reference to FIGs. 1, 3 and 4.

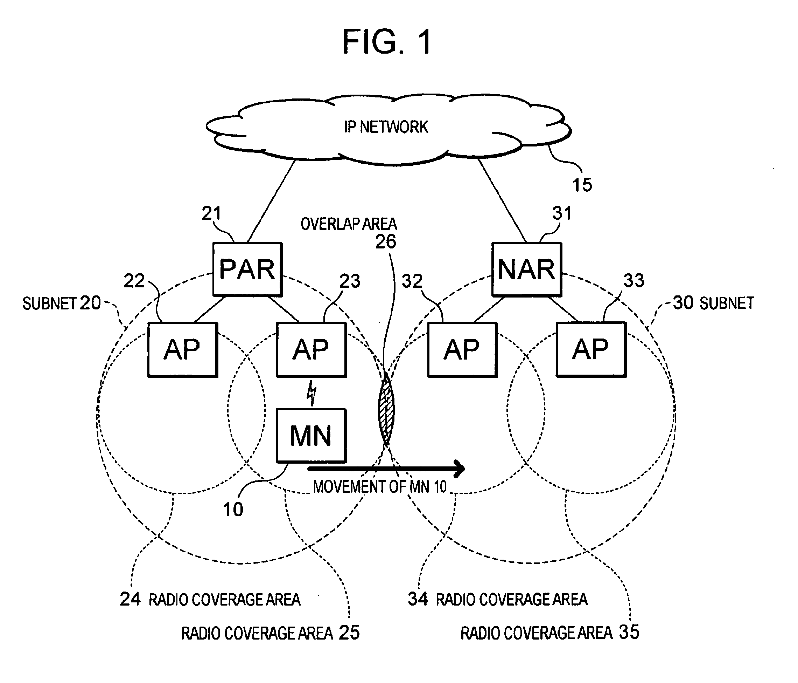

A radio communication system shown in FIG. 1 includes an IP network (communication network) 15 such as the internet, a plurality of subnets (each referred to equally as a subnetwork) 20 and 30 connected to the IP network 15, and a mobile terminal (MN : Mobile Node) 10 connectable to one of the plurality of subnets 20 and 30. Incidentally, in FIG. 1, two subnets 20 and 30 are shown as the plurality of subnets 20 and 30.

The subnet 20 is composed of an access router (PAR) 21 made to carry out routing with respect to an IP packet (packet data) and a plurality of access points (AP) 22 and 23 forming unique radio coverage areas (communicable areas) 24 and 25, respectively. Each of these APs 22 and 23 is connected to the PAR 21, and the PAR 21 is connected to the IP network 15. In FIG. 1, two APs 22 and 23 are shown as the plurality of APs 22 and 23. Likewise, the subnet 30 is configured with an access router (NAR) 31 and a plurality of APs 32 and 33 in the same connection mode as that of the aforesaid subnet 20.

This case assumes a case of conducting handover from the subnet 20 to the subnet 30 when the MN 10 moves from the interior of the radio coverage area 25 established by the AP 23 through an overlap area 26 to the radio coverage area 34 established by the AP 32, and an access router which exists in a higher level of the AP 23 and to which the MN 10 has a connection before the handover will hereinafter be referred to as a PAR (Previous Access Router) 21 while an access router which exists in a higher level of the AP 32 and to which the MN 10 has a connection after the handover will hereinafter be referred to as an NAR (New Access Router) 31.

In addition, the PAR 21 forming a component of the subnet 20 and the NAR 31 forming a component of the subnet 30 are communicable with each other through the IP network 15, that is, the subnet 20 and the subnet 30 are in a connected relation to each other through the IP network 15.

Secondly, referring to FIG. 1, a description will be given of an operation of FMIP. In the FMIP, two operating modes according to whether or not to receive an FBAck message exist in a link (link before the handover) to which the MN 10 has a connection before the handover. This has a bearing on whether or not the MN 10 transmits an FBU message through the link before the handover.

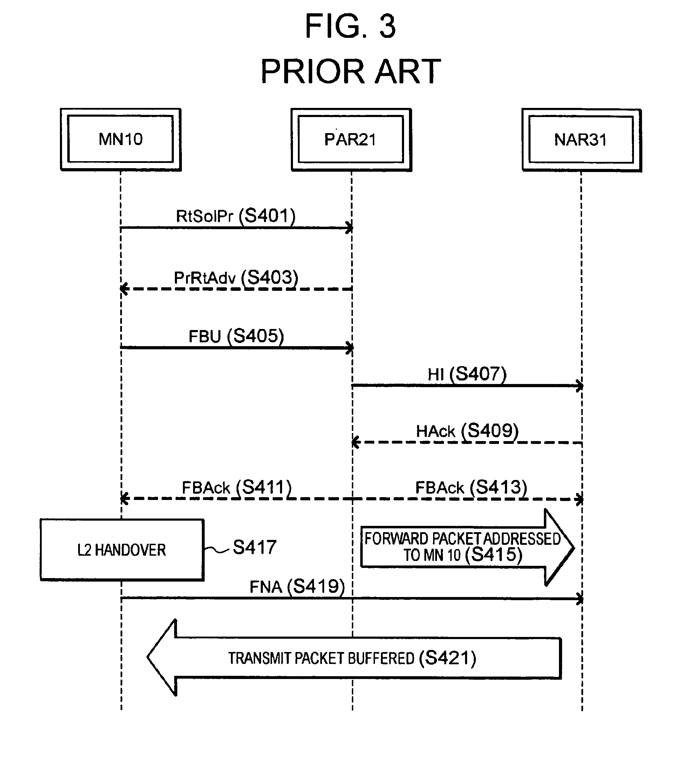

First, a description will be given of an operation of the FMIP in a case in which the MN 10 transmits the FBU message through a link before the handover. FIG. 3 is a sequential chart showing the outline of an operating mode of the FMIP in a case in which the MN 10 according to a conventional technique transmits an FBU message through the link before the handover.

For example, when the MN 10 starts the movement from an area (radio coverage area 25 of the AP 23) of the PAR 21 to an area (radio coverage area 34 of the AP 32) of the NAR 31, the layer 2 detects the movement thereof, and the handover in the layer 3 starts in conjunction with it. For example, the determination of the start of this handover is made by making a comparison between a received signal strength from the AP 23 in the overlap area 26 and a received signal strength from the AP 32 therein.

When information including an AP-ID (identification information on each AP) on the AP 32, which is a driving destination, is notified from the layer 2, the MN 10 first transmits a RtSolPr (Router Solicitation for Proxy, or Router Solicitation for Proxy Advertisement) message including the AP-ID of the AP 32 to the PAR 21 presently connected thereto (step S401). Upon receipt of this RtSolPr message, the PAR 21 retrieves an access router lying in the neighborhood on the basis of the AP-ID of the AP 32 notified from the MN 10 to acquire the information on the NAR 31, or acquires the information on the NAR 31 from the information already retrieved (information held in the PAR 21).

In addition, the PAR 21 transmits, to the MN 10, a PrRtAdv (Proxy Router Advertisement) message including the information on the NAR 31 (for example, information such as a network prefix of the subnet 30 the NAR 31 constitutes) as a response to the RtSolPr message (step S403). Upon receipt of the PrRtAdv message, the MN 10 configures an NCoA (New Care of Address), which is an address adaptable in the subnet 30, through the use of the network prefix of the included in the PrRtAdv message, the link layer address of the MN 10 itself and others, and transmits an FBU (Fast Binding Update) message including this NCoA to the PAR 21 (step S405).

Upon receipt of the FBU message, the PAR 21 transmits an HI (Handover Initiate) message including this NCoA to the NAR 31 for confirming whether or not the NCoA configured in the MN 10 is usable in the subnet 30 (step S407). Upon receipt of the HI message, the NAR 31 verifies whether or not the NCoA included in the HI message is valid, and if the NCoA is valid, and the NAR 31 transmits an HAck (Handover Acknowledge) message specifying a status indicating this result to the PAR 21 (step S409). When receiving the HAck message, the PAR 21 transmits an FBAck (Fast Binding Acknowledgment) notifying this result to the MN 10 and the NAR 31 (steps S411, S413), and forwards a packet, addressed to the MN 10, to the NAR 31 (step S415). When the packet addressed to the MN 10 is forwarded from the PAR 21, the NAR 31 buffers the packet.

Following this, the MN 10 actually starts the movement to the subnet 30 and carries out, for example, L2 handover from the AP 23 to the AP 32, or the like (step S417) and, immediately after the connection switching to the NAR 31, transmits, to the NAR 31, an FNA (Fast Neighbor Advertisement) message for making a request for the transmission of the notification on the connection to the NAR 31 and the packet buffered (step S419). Upon receipt of this FNA message, the NAR 31 transmits the buffered packet, addressed to the MN 10, to the MN 10 (step S421).

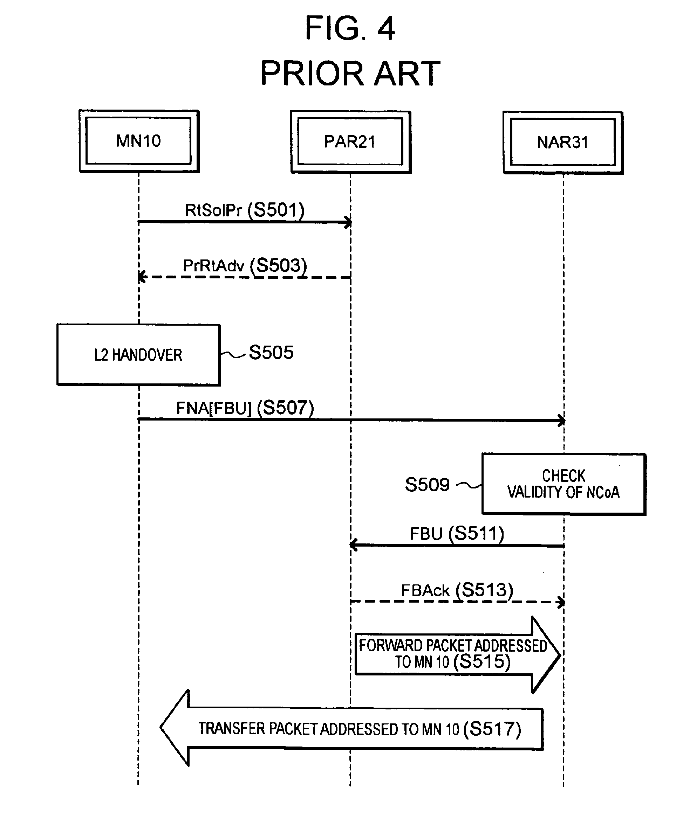

Furthermore, a description will be given of an operation of the FMIP in a case in which the MN 10 does not transmits an FBU message through the link before the handover but transmits an FNA (message including FBU) through the link after the handover. FIG. 4 is a sequential chart showing the outline of an operating mode of the FMIP in a case in which the MN 10 according to the conventional technique transmits an FNA[FBU] message through the link after the handover.

As well as the operating mode shown in FIG. 3, the MN 10 transmits a RtSolPr message (step S501) and, although receiving a PrRtAdv message (step S503), starts the actual movement to the subnet 30 without making the transmission (step S405 in FIG. 3) of the FBU message in the operating mode shown in FIG. 3, and carries out, for example, the L2 handover from the AP 23 to the AP 32 (step S505).

In addition, immediately after the connection switching to the NAR 31, the MN 10 transmits an FNA message internally including an FBU message (which will be referred to as am FNA[FBU]) to the NAR 31 (step S507). The NAR 31 verifies the validity of the NCoA included in the FNA message (step S509) and, if this NCoA is valid, transmits the FBU message to the PAR 21 (step S511). If the NCoA is invalid, the NAR 31 transmits, to the MN 10, an NAAck (Neighbor Advertisement Acknowledgment) message for making a notification to the effect that the NCoA is unavailable.

The PAR 21 transmits an FBAck message as a response to the FBUmessage to the NAR 31 (step S513), and forwards a packet, addressed to the MN 10, to the NAR 31 (step S515). The NAR 31 receives the FBAck message from the PAR 21 and transfers the packet from the PAR 21, addressed to the MN 10, to the MN 10 (step S517).

In the operating mode shown in FIG. 3, the exchange of messages and various types of processing (for example, processing such as the verification of the NCoA) are frequently conducted before the L2 handover while, in the operating mode shown in FIG. 4, the quantities of the exchange of messages and various types of processing to be conducted before the L2 handover are relatively small and the exchange of messages and various types of processing are carried out after the L2 handover. Therefore, the operating mode shown in FIG. 3 is a mode which may be effective in the case of a low-speed movement that the time from when the MN 10 determines the handover until the L2 handover is conducted is relatively long, while the operating mode shown in FIG. 4 is a mode which may be effective in the case of a high-speed movement that the time from when the MN 10 determines the handover until the L2 handover is conducted is relatively short.

Although the following non-patent document 1 makes a disclosure to the effect that, in the operating mode shown in FIG. 3, the PAR 21 transmits an FBAck message to the MN 10 (step S411) and transmits the FBAck message to the NAR 31 (step S413), the usage of the FBAck message transmitted to the NAR 31 is not mentioned at any point.
Non-Patent Document 1: Rajeev Koodli "Fast Handovers for Mobile IPv6", draft-ietf-mobileip-fast-mipv6-08, October 2003

However, in the above-mentioned operating mode shown in FIG. 3, it can be considered that, although the MN 10 has transmitted the FBU message in the step S405, it thereafter carries out the L2 handover without receiving the FBAckmessage from the PAR 21 so as to make the switching of the link to be connected. In this case, the MN 10 cannot grasp the normal processing on the FBU message which is to be actually graspable through the reception of the FBAck message, that is, the link switching is conducted in a state where difficulty is experienced in grasping whether or not the FBU message is processed normally. Accordingly, immediately the connection to the same link as that to the NAR 31, the MN 10 conducts the transmission of an FNA[FBU] message to the NAR 31 as shown in the step S507 of FIG. 4.

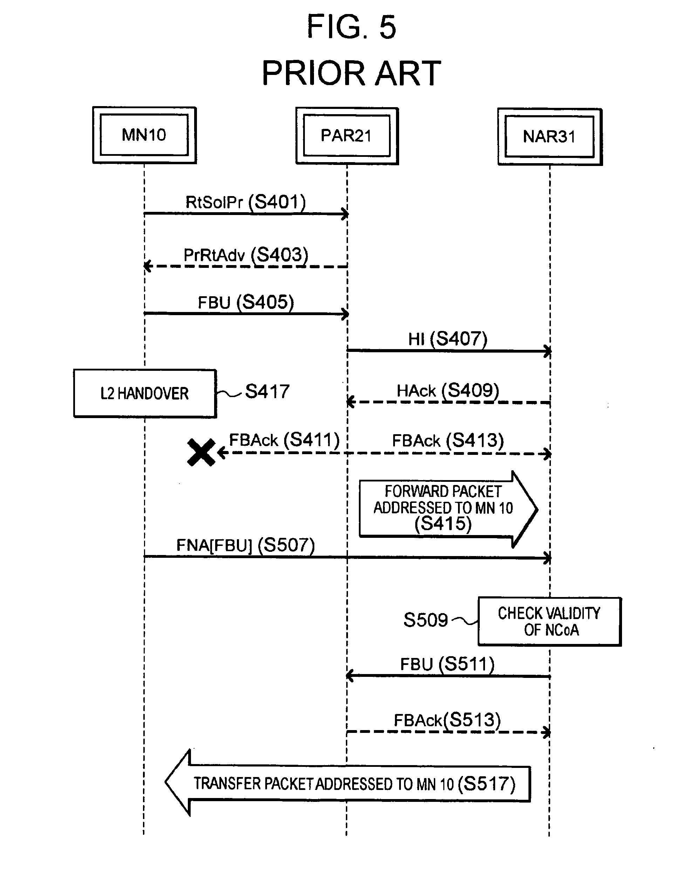

A sequential chart expressing an operation in such a situation is as shown in FIG. 5. FIG. 5 is a sequential chart showing the outline of an operation in a case in which, after the transmission of an FBU message, an MN according to a conventional technique carries out the L2 handover prior to receiving an FBAck message. This sequential chart of FIG. 5 is basicallymade up of a combination of the first half section (steps S401 to S417, however, the L2 handover in the step S417 is conducted before the reception of the FBAck message, and the MN 10 cannot receive the FBAck message from the PAR 21 in the step S411) of the operating mode shown in FIG. 3 and the second half section (steps S507 to S517, however, the packet forwarding in the step S515 has already started in the step S415) of the operating mode shown in FIG. 4.

In the sequential chart of FIG. 5, although the NAR 31 verifies an NCoA included in an HI message after the reception of the HI message in the step S407, there is a need to again receive the FNA[FBU] message in the step S507 and to again perform the NCoA verification and exchange the FBU message and the FBAck message with respect to the PAR 21 (steps S511 and S513). Moreover, after the reception of the FBU message in the step S405, although the PAR 21 transmits the FBAckmessage to the MN 10 in the step S411 through the exchange of the HI message and the HAckmessage (steps S407 and S409) with respect to the NAR 31, there is a need to again receive the FBU message from the NAR 31 in the step S511 and to transmit the FBAck message to the NAR 31 in the step S513.

The above-mentioned problems are collected as follows.
In a case in which, although the MN 10 transmits the FBU message to the PAR 21 prior to the handover, the switching of connection from the PAR 21 to the NAR 31 is made before the reception of the FBAck message from the PAR 21.
(1) Although the PAR 21 transmits the FBAck message through the transmission/reception of the HI message and the HAck message after the reception of the FBU message from the MN 10, there is a need for the PAR 21 to again receive the FBU message from the NAR 31 and transmit the FBAck message.
(2) The NAR 31 is required to doubly carry out the verification of the NCoA included in the HI message and the verification of the NCoA included in the FNA[FBU] message.

Each of these problems (1) and (2) causes an increase in network resource (increase in communication traffic and increase in processing load in the PAR 21 and the NAR 31) and a delay of the start of packet forwarding, addressed to the MN 10, from the NAR 31 to the MN 10, and further enhances the possibility of occurrence of packet loss because of an increase in packet quantity to be forwarded from the PAR 21 to the NAR 31.

### DISCLOSURE OF THE INVENTION

In consideration of the above-mentioned problems, it is an object of the present invention to provide a communication handover method, communication system, communication message processing method and communication message processing program, capable of lessening the delay involved in the conventional FMIP and of reducing packet loss.

For achieving this purpose, a communication handover method according to the present invention, which is conducted when, in a communication system where a first access router pertaining to a first subnet and a second access router pertaining to a second subnet different from the first subnet are connected through an IP network, a mobile terminal connected through a radio communication to the first subnet makes connection switching from the aforesaid first subnet to the aforesaid second subnet, comprises:
a step in which the mobile terminal configures address information adaptable to the second subnet in a state connected to the first subnet,
a step in which the mobile terminal transmits an FBU message including the address information to the first access router,
a step in which the first access router transmits, to both the mobile terminal and the second access router, an FBAck message for making a notification to the effect that the address information is valid,
a step in which the second access router stores information on the FBAck message received from the first access router,
a step in which the first access router starts to forward a packet, addressed to the mobile terminal, to the second access router along with the transmission of the FBAck message,
a step in which the second access router buffers the packet addressed to the mobile terminal and received from the first access router,
a step in which the mobile terminal carries out L2 handover for making connection switching from the first subnet to the second subnet without receiving the FBAck message from the first access router and transmits an FNA message including the FBU message to the second access router,
a step in which the second access router confirms the validity of the address information included in the FNA message,
a step in which the second access router makes a collation between the FBU message included in the FNA message and the information on the FBAck message received from the first access router and stored, and
a step in which, when the information on the FBAck message corresponding to the FBU message included in the FNA message exists, the second access router forwards the packet, received from the first access router and buffered, to the mobile terminal.
This arrangement is capable of lessening the delay which can occur in the conventional FMIP and of reducing the packet loss.

Furthermore, in addition to the above-mentioned communication handover method, a communication handover method according to the present invention further comprises:
a step in which the first access router transmits an HI message including the address information to the second access router after receiving the FBU message from the mobile terminal, and
a step in which the second access router confirms the validity of the address information included in the HI message and then transmits, to the first access router, an HAck message for making a notification to the effect that the address information is valid.
This arrangement can verify the validity of an NCoA through the transmission/reception of the HI message and HAck message as well as the conventional FMIP.

In addition, for achieving the above-mentioned purpose, a communication handover method according to the present invention, which is conducted when, in a communication system where a first access router pertaining to a first subnet and a second access router pertaining to a second subnet different from the first subnet are connected through an IP network, a mobile terminal connected through a radio communication to the first subnet makes connection switching from the aforesaid first subnet to the aforesaid second subnet, comprises:
a step in which the mobile terminal configures address information adaptable to the second subnet in a state connected to the first subnet,
a step in which the mobile terminal transmits an FBU message including the address information to the first access router,
a step in which the first access router receives the FBU message from the mobile terminal and then transmits an HI message including the address information to the second access router,
a step in which the second access router confirms the validity of the address information included in the HI message and then transmits, to the first access router, an HAck message for making a notification to the effect that the address information is valid,
a step in which the first access router transmits, to both the mobile terminal and the second access router, an FBAck message for making a notification to the effect that the address information is valid,
a step in which the second access router stores information on the FBAck message for making a notification to the effect that the address information received from the first access router is valid,
a step in which the first access router starts to forward a packet, addressed to the mobile terminal, to the second access router along with the transmission of the FBAck message,
a step in which the second access router buffers the packet addressed to the mobile terminal and received from the first access router,
a step in which the mobile terminal carries out L2 handover for making connection switching from the first subnet to the second subnet without receiving the FBAck message from the first access router and transmits an FNA message including the FBU message to the second access router,
a step in which the second access router makes a collation between the FBU message included in the FNA message and the information on the FBAckmessage received from the first access router and stored, and
a step in which, when the information on the FBAck message corresponding to the FBU message included in the FNA message exists, the second access router transmits the packet, received from the first access router and buffered, to the mobile terminal.
This arrangement is capable of lessening the delay which can occur in the conventional FMIP and of reducing the packet loss.

Still additionally, for achieving this purpose, a communication handover method according to the present invention, which is conducted when, in a communication system where a first access router pertaining to a first subnet and a second access router pertaining to a second subnet different from the first subnet are connected through an IP network, a mobile terminal connected through a radio communication to the first subnet makes connection switching from the aforesaid first subnet to the aforesaid second subnet, comprises:
a step in which the mobile terminal configures address information adaptable to the second subnet in a state connected to the first subnet,
a step in which the mobile terminal transmits an FBU message including the address information to the first access router,
a step in which the first access router receives the FBU message from the mobile terminal and then transmits an HI message including the address information to the second access router,
a step in which the second access router confirms the validity of the address information included in the HI message and then transmits, to the first access router, an HAck message for making a notification to the effect that the address information is valid,
a step in which the first access router transmits, to both the mobile terminal and the second access router, an FBAck message formaking a notification to the effect that the address information is valid,
a step in which the second access router stores information on the FBAck message received from the first access router together with the information indicative of whether or not the address information is valid,
a step in which the first access router starts to forward a packet, addressed to the mobile terminal, to the second access router along with the transmission of the FBAck message,
a step in which the second access router buffers the packet addressed to the mobile terminal and received from the first access router,
a step in which the mobile terminal carries out L2 handover for making connection switching from the first subnet to the second subnet without receiving the FBAck message from the first access router and transmits an FNA message including the FBU message to the second access router,
a step in which the second access router makes a collation between the FBU message included in the FNA message and the information on the FBAckmessage received from the first access router and stored, and
a step in which, when the information on the FBAck message corresponding to the FBU message included in the FNA message exists and the information indicative of the address information being valid is stored in conjunction with the information on the FBAck message, the second access router transmits the packet, received from the first access router and buffered, to the mobile terminal.
This arrangement is capable of lessening the delay which can occur in the conventional FMIP and of reducing the packet loss.

Yet additionally, in addition to the above-mentioned communication handover method, in a communication handover method according to the present invention, information on a pair of transmitting side address and transmitted side address, specified at a header of the FBAck message, is used as the information on the FBAck message.
This enables the collation with the FBU message included in the FNA message to be made on the basis of the information on the pair of transmitting side address and transmitted side address stored as the information on the FBAck message and designated at the header of the FBAck message.

Moreover, in addition to the above-mentioned communication handover method, a communication handover method according to the present invention further comprises a step in which the second access router deletes the information on the FBAck message collated with the FBU message included in the FNA message.
This arrangement can delete, of the information on the FBAck message held in the second access route, the information which has been unnecessary.

Furthermore, for achieving the above-mentioned purpose, a communication system according to the present invention in which a first access router pertaining to a first subnet and a second access router pertaining to a second subnet different from the first subnet are connected through an IP network and a mobile terminal makes a connection with the first subnet or the second subnet through a radio communication,
wherein the mobile terminal configures address information adaptable to the second subnet in a state connected to the first subnet,
the mobile terminal transmits an FBU message including the address information to the first access router,
the first access router transmits, to both the mobile terminal and the second access router, an FBAck message for making a notification to the effect that the address information is valid,
the second access router stores information on the FBAck message received from the first access router,
the first access router starts to forward a packet, addressed to the mobile terminal, to the second access router along with the transmission of the FBAck message,
the second access router buffers the packet addressed to the mobile terminal and received from the first access router,
the mobile terminal carries out L2 handover for making connection switching from the first subnet to the second subnet without receiving the FBAck message from the first access router and transmits an FNA message including the FBU message to the second access router,
the second access router confirms the validity of the address information included in the FNA message,
the second access router makes a collation between the FBU message included in the FNA message and the information on the FBAck message received from the first access router and stored, and
when the information on the FBAck message corresponding to the FBU message included in the FNA message exists, the second access router transmits the packet, received from the first access router and buffered, to the mobile terminal.
This arrangement is capable of lessening the delay which can occur in the conventional FMIP and of reducing the packet loss.

Still furthermore, in addition to the above-mentioned communication handover method, in a communication system according to the present invention,
the first access router transmits an HI message including the address information to the second access router after receiving the FBU message from the mobile terminal, and
the second access router confirms the validity of the address information included in the HI message and then transmits, to the first access router, an HAck message for making a notification to the effect that the address information is valid.
This arrangement can verify the validity of an NCoA through the transmission/reception of the HI message and HAck message as well as the conventional FMIP.

In addition, for achieving the above-mentioned purpose, a communication system according to the present invention in which a first access router pertaining to a first subnet and a second access router pertaining to a second subnet different from the first subnet are connected through an IP network and a mobile terminal makes a connection with the first subnet or the second subnet through a radio communication,
wherein the mobile terminal configures address information adaptable to the second subnet in a state connected to the first subnet,
the mobile terminal transmits an FBU message including the address information to the first access router,
the first access router receives the FBU message from the mobile terminal and then transmits an HI message including the address information to the second access router,
the second access router confirms the validity of the address information included in the HI message and then transmits, to the first access router, an HAck message for making a notification to the effect that the address information is valid,
the first access router transmits, to both the mobile terminal and the second access router, an FBAck message for making a notification to the effect that the address information is valid,
the second access router stores information on the FBAck message formaking a notification to the effect that the address information received from the first access router is valid,
the first access router starts to forward a packet, addressed to the mobile terminal, to the second access router along with the transmission of the FBAck message,
the second access router buffers the packet addressed to the mobile terminal and received from the first access router,
the mobile terminal carries out L2 handover for making connection switching from the first subnet to the second subnet without receiving the FBAck message from the first access router and transmits an FNA message including the FBU message to the second access router,
the second access router makes a collation between the FBU message included in the FNA message and the information on the FBAck message received from the first access router and stored, and
when the information on the FBAck message corresponding to the FBU message included in the FNA message exists, the second access router transmits the packet, received from the first access router and buffered, to the mobile terminal.
This arrangement can lessen the delay which can occur in the conventional FMIP and reduce the packet loss.

Still additionally, for achieving the above-mentioned purpose, a communication system according to the present invention in which a first access router pertaining to a first subnet and a second access router pertaining to a second subnet different from the first subnet are connected through an IP network and a mobile terminal makes a connection with the first subnet or the second subnet through a radio communication,
wherein the mobile terminal configures address information adaptable to the second subnet in a state connected to the first subnet,
the mobile terminal transmits an FBU message including the address information to the first access router,
the first access router receives the FBU message from the mobile terminal and then transmits an HI message including the address information to the second access router,
the second access router confirms the validity of the address information included in the HI message and then transmits, to the first access router, an HAck message for making a notification to the effect that the address information is valid,
the first access router transmits, to both the mobile terminal and the second access router, an FBAck message for making a notification to the effect that the address information is valid,
the second access router stores information on the FBAck message received from the first access router together with the information indicative of whether or not the address information is valid,
the first access router starts to forward a packet, addressed to the mobile terminal, to the second access router along with the transmission of the FBAck message,
the second access router buffers the packet addressed to the mobile terminal and received from the first access router,
the mobile terminal carries out L2 handover for making connection switching from the first subnet to the second subnet without receiving the FBAck message from the first access router and transmits an FNA message including the FBU message to the second access router,
the second access router makes a collation between the FBU message included in the FNA message and the information on the FBAck message received from the first access router and stored, and
when the information on the FBAck message corresponding to the FBU message included in the FNA message exists and the information indicative of the address information being valid is stored in conjunction with the information on the FBAck message, the second access router transmits the packet, received from the first access router and buffered, to the mobile terminal.
This arrangement can lessen the delay which can occur in the conventional FMIP and reduce the packet loss.

In addition to the above-mentioned communication system, in a communication system according to the present invention, information on a pair of transmitting side address and transmitted side address, specified at a header of the FBAck message, is used as the information on the FBAck message.
This enables the collation with the FBU message included in the FNA message to be made on the basis of the information on the pair of transmitting side address and transmitted side address stored as the information on the FBAck message and designated at the header of the FBAck message.

Moreover, in addition to the above-mentioned communication system, in a communication system according to the present invention, the second access router deletes the information on the FBAck message collated with the FBU message included in the FNA message.
This arrangement can delete, of the information on the FBAck message held in the second access route, the information which becomes unnecessary.

Furthermore, for achieving the above-mentioned purpose, a communication message processing method according to the present invention, which is conducted in a second access router when, in a communication system where a first access router pertaining to a first subnet and said second access router pertaining to a second subnet different from the first subnet are connected through an IP network, a mobile terminal connected through a radio communication to the first subnet makes connection switching from the aforesaid first subnet to the aforesaid second subnet, comprises:
a step of receiving, from the first access router, an FBAck message which is a response message to an FBU message including address information configured by the mobile terminal and adaptable to the second subnet,
a step of storing information on the FBAck message received from the first access router,
a step of buffering a packet addressed to the mobile terminal and sent by packet forwarding to the mobile terminal which is started along with transmission of the FBAck message,
a step of receiving an FNA message including the FBU message from the mobile terminal which carries out L2 handover for connection switching from the first subnet to the second subnet,
a step of confirming the validity of the address information in the FBU message included in the FNA message,
a step of making a collation between the FBU message included in the FNA message and the information on the FBAck message received from the first access router and stored, and
a step of, when the information on the FBAck message corresponding to the FBU message included in the FNA message exists, transmitting the packet, received from the first access router and buffered, to the mobile terminal.
This arrangement can lessen the delay which can occur in the conventional FMIP and reduce the packet loss.

In addition to the above-mentioned communication message processing method, a communication message processing method according to the present invention further comprises:
a step of receiving an HI message including the address information from the first access router, and
a step of confirming the validity of the address information included in the HI message and then transmitting, to the first access router, an HAck for making a notification to the effect that the address information is valid.
This arrangement can verify the validity of an NCoA through the transmission/reception of the HI message and HAck message as well as the conventional FMIP.

Still furthermore, for achieving the above-mentioned purpose, a communication message processing method according to the present invention, which is conducted in a second access router when, in a communication system where a first access router pertaining to a first subnet and said second access router pertaining to a second subnet different from the first subnet are connected through an IP network, a mobile terminal connected through a radio communication to the first subnet makes connection switching from the aforesaid first subnet to the aforesaid second subnet, comprises:
a step of receiving, from the first access router, an HI message including address information configured by the mobile terminal and adaptable to the second subnet,
a step of confirming the validity of the address information included in the HI message and then transmitting, to the first access router, an HAck message for making a notification to the effect that the address information is valid,
a step of receiving, from the first access router, an FBAck message which is a response to the FBU message,
a step of storing information on the FBAck message making a notification to the effect that the address information received from the first access router is valid,
a step of buffering a packet addressed to the mobile terminal and sent by the packet forwarding to the mobile terminal which is started along with transmission of the FBAck message,
a step of receiving an FNA message including the FBU message from the mobile terminal which carries out L2 handover for making connection switching from the first subnet to the second subnet,
a step of making a collation between the FBU message included in the FNA message and the information on the FBAck message received from the first access router and stored, and
a step of, when the information on the FBAck message corresponding to the FBU message included in the FNA message exists, transmitting, to the mobile terminal, the packet received from the first access router and buffered.
This arrangement can lessen the delay which can occur in the conventional FMIP and reduce the packet loss.

Yet furthermore, for achieving the above-mentioned purpose, a communication message processing method according to the present invention, which is conducted in a second access router when, in a communication system where a first access router pertaining to a first subnet and said second access router pertaining to a second subnet different from the first subnet are connected through an IP network, a mobile terminal connected through a radio communication to the first subnet makes connection switching from the aforesaid first subnet to the aforesaid second subnet, comprises:
a step of receiving, from the first access router, an HI message including address information configured by the mobile terminal and adaptable to the second subnet,
a step of confirming the validity of the address information included in the HI message and then transmitting, to the first access router, an HAck message for making a notification to the effect that the address information is valid,
a step of receiving, from the first access router, an FBAck message which is a response to the FBU message,
a step of storing information on the FBAck message received from the first access router together with information indicative of whether or not the address information is valid,
a step in which the first access router starts forwarding a packet, addressed to the mobile terminal, to the second access router along with transmission of the FBAck message,
a step in which the second access router buffers the packet addressed to the mobile terminal and received from the first access router,
a step of receiving an FNA message including the FBU message from the mobile terminal which carries out L2 handover for making connection switching from the first subnet to the second subnet,
a step of making a collation between the FBU message included in the FNA message and the information on the FBAck message received from the first access router and stored, and
a step of, when the information on the FBAck message corresponding to the FBU message included in the FNA message exists and information indicative of the address information being valid is stored in conjunction with the information on the FBAck message, transmitting, to the mobile terminal, the packet received from the first access router and buffered.
This arrangement can lessen the delay which can occur in the conventional FMIP and reduce the packet loss.

Moreover, in addition to the above-mentioned communication message processing method, in a communication message processing method according to the present invention, information on a pair of transmitting side address and transmitted side address, specified at a header of the FBAck message, is used as the information on the FBAck message.
This enables the collation with the FBU message included in the FNA message to be made on the basis of the information on the pair of transmitting side address and transmitted side address stored as the information on the FBAck message and designated at the header of the FBAck message.

Still moreover, in addition to the above-mentioned communication message processing method, a communication message processing method according to the present invention further comprises a step of deleting the information on the FBAck message collated with the FBU message included in the FNA message.
This arrangement can delete, of the information on the FBAck message held in the second access route, the information which has been unnecessary.

Yet moreover, in accordance with the present invention, there is provided a communication message processing program for implementing the above-mentioned communication message processing method through the use of a computer.

The communication handover method, communication system, communication message processing method and communication message processing program according to the present invention have the above-mentioned arrangements, which decreases the delay which can occurring in the conventional FMIP and reduces the packet loss.

### BRIEF DESCRIPTION OF THE DRAWINGS

[FIG. 1] An illustrative view showing a configuration of a radio communication system common to the present invention and a conventional technique.
[FIG. 2] A sequential chart for explaining an operation to be conducted when an MN carries out handover in a first embodiment of the present invention.
[FIG. 3] A sequential chart showing the outline of an operating mode of an FMIP when an MN according to a conventional technique transmits an FBU message through a link before handover.
[FIG. 4] A sequential chart showing the outline of an operating mode of an FMIP when an MN according to a conventional technique transmits an FBA[FBU] message through a link after handover.
[FIG. 5] A sequential chart showing the outline of an operation when, after transmitting an FBU message, an MN according to a conventional technique carries out L2 handover before receiving an FBAck message.

### BEST MODE FOR CARRYING OUT THE INVENTION

First and second embodiments of the present invention will be described hereinbelow with reference to the drawings. The description of the first and second embodiments of the present invention will also be given with reference to the configuration of the radio communication system shown in FIG. 1, which has been referred to for the description of the conventional technique. That is, it is assumed that the handover is conducted from the subnet 20 to the subnet 30 when the MN 10 moves from the interior of the radio coverage area 25 established by the AP 23 through the overlap area 26 to the interior of the radio coverage area 34 established by the AP 32.

### <First Embodiment>

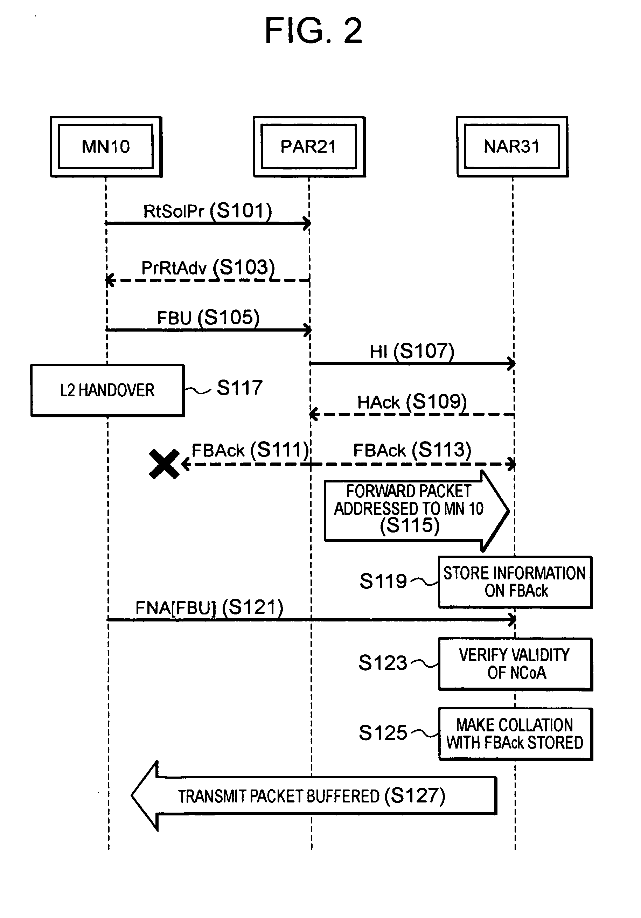

Furthermore, referring to the sequential chart of FIG. 2, a description will be given of an operation according to a first embodiment of the present invention which to be conducted when the MN 10 carries out the handover from the subnet 20 to the subnet 30 as shown in FIG. 1. FIG. 2 is a sequential chart for explaining an operation to be conducted when an MN carries handover in the first embodiment of the present invention.

When information including an AP-ID (identification information on each AP) of the AP 32 which is a driving destination is notified from the layer 2, the MN 10, which has determined the start of the handover, transmits a RtSolPr message including the AP-ID of the AP 32 to the PAR 21 presently connected thereto (step S101). Upon receipt of the RtSolPr message, the PAR 21 acquires information of the NAR31 (for example, information such as network prefix of the subnet 30 established by the NAR 31) on the basis of the AP-ID of the AP 32 notified from the MN 10, and transmits a PrRtAdv message including information on the NAR 31 as a response to the RtSolPr message to the MN 10 (step S103).

Upon receipt of the PrRtAdv message, the MN 10 configures an NCoA adaptable in the subnet 30 through the use of the network prefix of the subnet 30 included in the PrRtAdv message, a link layer address of the MN 10 itself and others, and transmits an FBU message including this NCoA to the PAR 21 (step S105).

Incidentally, in a case in which the MN 10 transmits an FBU message through a link connected thereto before the handover, as a rule, there is a need for an NCoA configured in a stateless fashion to be included in the FBU message, and also in this case, according to the rule, an FBU message including an NCoA is transmitted from the MN 10 to the PAR 21.

Upon receipt of the FBU message, the PAR 21 transmits an HI message including this NCoA to the NAR 31 for confirming whether or not the NCoA configured by the MN 10 is an address usable in the subnet 30 (step S107), and the NAR 31 verifies whether or not the NCoA included in this HI message is valid. If the NCoA is valid, the NAR 31 transmits, to the PAR 21, an HAck message specifying a status showing a result of the verification (step S109). In this connection, although, if the NCoA is invalid, the NAR 31 transmits, to the PAR 21, an HAck message specifying a status showing a result thereof and an HAck message including an NCoA allocated to the MN 10, a description will be given here of a case in which the NCoA is valid. Moreover, as well as the conventional example, the transmission/reception of the HI message and the HAck message is omissible.

Upon receipt of the HAck message, the PAR 21 transmits, to the MN 10 and the NAR 31, an FBAck message for notifying a result of the verification to the effect that the NCoA is valid (steps S111 and S113), and forwards a packet, directed at the MN 10 to the NAR 31 (step S115). When the packet directed at the MN 10 is fowarded from the PAR 21, the NAR 31 buffers the packet. Moreover, the NAR 31 receives the FBAck message transmitted from the PAR 21 in the step S113 and temporarily stores the information on this FBAck message (step S119).

Incidentally, an information storing means for temporarily storing the information on the FBAck message is realizable with an arbitrary information storage medium existing in the NAR 31, which is a memory such as RAM, a hard disk, or the like. Moreover, as the information on the FBAck message to be stored by the NAR 31, for example, information on a pair of transmitting side IP address and transmitted side IP address, specified at an IPv6 header of the FBAck message, or other information is available. It is also acceptable to simultaneously store information included in the FBAckmessage such as a sequence number of the FBAck message.

On the other hand, before receiving the FBAck message from the PAR 21, the MN 10 has carried out the L2 handover from the AP 23 to the AP 32 (step S117) and is away from the link of the PAR 21 without receiving the FBAck message transmitted from the PAR 21 in the step S111. Since the MN 10 does not receive the FBAck message from the PAR 21, it is in a state where difficulty is encountered in grasping whether or not the FBU message is processed normally. For this reason, immediately after the connection to the same link as that of the NAR 31, the MN 10 transmits an FNA[FBU] message including the FBU message to the NAR 31 (step S121).

The NAR 31 verifies the validity of the NCoA included in the FNA message (step S123) and, if the NCoA is valid, makes a collation between the FBAckmessage stored in the information storing means and the FBU message in the FNA message (step S125).

In this collation on the FBU message in the step S125, for example, a collation is made between the information on a pair of IP addresses of FBAck message transmitting side and transmitted side and a pair of IP addresses of FBU message transmitting side and transmitted side, with the FBAck message being stored in the information storing means and the FBU message being included in the FNA message. On the basis of a result of this collation, a decision is made as to whether or not the FBAck message corresponding to the FBU message included in the FNA message has already received.

If the corresponding FBAck message exists, the NAR 31 assumes that the FBU message (FBU message transmitted in the step S105) transmitted to the PAR 21 by the MN 10 before the handover is normally processed and immediately transmits the buffered packet, addressed to the MN 10, to the MN 10 (step S127).

On the other hand, if the corresponding FBAck message does not exist, as in the case of the conventional FMIP, the NAR 31 transmits an FBU message to the PAR 21 and receives an FBAck message, and then transmits the packet directed at the MN 10 and buffered to the MN 10. Moreover, in the case of the verification of the validity of the NCoA in the step S123, if a decision is made that the NCoA is invalid, the NAR 31 transmits, to the MN 10, an NAAck message for making a notification to the effect that the NCoA is not usable.

After the completion of the collation in the step S125, there is no need to store the information on the FBAck message related to the MN 10 in the information storing means, and it is preferable to delete the information in the information storing means. Likewise, it is preferable to delete the FBAck message stored for a predetermined period of time or longer in the information storing means. Moreover, it can be considered that the NAR 31 receives an FNA message, not including an FBU, from the MN 10 in the step S121. This can occur in a case in which the MN 10 operates in corresponding relation to the operating mode shown in FIG. 3 and the MN 10 already receives the FBAck message from the PAR 21 before the handover. In this case, there is no need for the NAR 31 to see the information on the FBAck message related to the MN 10 and stored in the information storing means and, preferably, in accordance with the reception of the FNA message which does not include the FBU message, the FBAck message related to the MN 10 is deleted from the information storing means.

As described above, according to the first embodiment of the present invention, although the MN 10 transmits an FBU message to the PAR 21 before the handover, if the connection switching is thereafter made from the PAR 21 to the NAR 31 before the reception of the FBAck message from the PAR 21, the NAR 31 stores the information on the FBAck message received from the PAR 21 and, when receiving an FNA[FBU] message from the MN 10, the NAR 31 refers to the information on the FBAck message stored in the information storing means without making the transmission/reception of the FBU message and the FBAck message with respect to the PAR 21, which enables grasping whether or not the processing on the FBU message is normally conducted in the PAR 21. Thus, in the case of transmitting the FBAck message to the NAR 31 after the reception of the FBU message from the MN 10, it is possible to eliminate the need for the PAR 21 to again receive the FBU message from the NAR 31 and transmit the FBAck message to the NAR 31, which can lessen the delay which can occur in the conventional FMIP and reduce the packet loss, thereby settling the problem (1) of the problems to be solved by the invention.

### <Second Embodiment>

Although in the above-described first embodiment the NAR 31 verifies the validity of the NCoA included in the FBU message in the FNA message in the step S123, it is also possible to simplify the verification of the validity of the NCoA in the step S123. In this case, in the step S107, the NAR 31 receives an HI message including an NCoA from the PAR 21 and makes verification as to whether or not the NCoA included in the HI message is valid.

In addition, for getting the verification result at this time, the information on the FBAck message is stored in the information storing means in the step S119. Concretely, for example, the result of the verification on the validity of the NCoA received from the MN 10 is stored together with the information on the FBAck message, or only the information on the FBAck message related to the MN 10 which provides the verification result showing that the NCoA is valid is stored in the information storing means, thereby associating the information on the FBAck message with the verification result on the NCoA received in the step S107.

Still additionally, for the verification of the validity of the NCoA in the step S123, the NAR 31 can make a decision on whether or not the NCoA is valid only by referring to the verification result (verification result obtained in the step S107) on the validity of the NCoA stored together with the information on the FBAckmessage. Therefore, in the step S123, the NAR 31 can easily grasp the verification result on the validity of the NCoA without conducting the same processing as that in the step S107.

As described above, according to the above-described second embodiment, when the information on the FBAck message and the verification result on the NCoA received in the step S107 are stored in a state associated with each other in the step S119, the NAR 31 can acquire the verification result on the validity of the NCoA by referring to the information stored in the information storing means. Thus, in the step S123, the verification on the validity of the NCoA becomes easily feasible, which can settling, in addition to the problem (1), the problem (2) mentioned as the problem to be solved by the invention.

As also seen from the above descriptions of the first and second embodiments, in the network which is disclosed in the non-patent document 1 and to which the conventional FMIP technique is applied, the present invention is realizable by changing only the function of the NAR 31 to which the MN 10 is connected after the handover. Therefore, with respect to the functions of the MN 10 and the PAR 21 and the respective messages including RtSolPr message, PrRtAdv message, FBU message, HI message, HAck message, FBAck message, FNA[FBU] message and others, those prescribed by the conventional FMIP technique are usable.

Moreover, for example, if the operating mode of the conventional FMIP shown in FIG. 3 is effective at a low-speed movement when the time from when the MN 10 determines the handover until the L2 handover is conducted is relatively long while the operating mode of the conventional FMIP shown in FIG. 4 is effective at a high-speed movement when the time from when the MN 10 determines the handover until the L2 handover is conducted is relatively short, thehandovermethodaccording to the present invention may correspond to an operating mode between these two operating modes and is effective at an intermediate-speed movement of the MN 10.

### INDUSTRIAL APPLICABILITY

The communication handover method, communication system, communication message processing method and communication message processing program according to the present invention are capable of lessening delay which can occur in the conventional FMIP and of reducing packet loss, and are applicable to technical fields which attempt to achieve the reduction of the delay attendant upon the common handover in the layer 3 and the reduction of the packet loss.

## Claims

1. A communication handover method, which is conducted when, in a communication system where a first access router pertaining to a first subnet and a second access router pertaining to a second subnet different from said first subnet are connected through an IP network, a mobile terminal connected through a radio communication to said first subnet makes connection switching from said first subnet to said second subnet, comprising:
a step in which said mobile terminal configures address information adaptable to said second subnet in a state connected to said first subnet;
a step in which said mobile terminal transmits an FBU message including said address information to said first access router;
a step in which said first access router transmits, to both said mobile terminal and said second access router, an FBAck message for making a notification to the effect that said address information is valid;
a step in which said second access router stores information on said FBAck message received from said first access router;
a step in which said first access router starts to forward a packet, addressed to said mobile terminal, to said second access router along with the transmission of said FBAck message;
a step in which said second access router buffers said packet addressed to said mobile terminal and received from said first access router;
a step in which said mobile terminal carries out L2 handover for making connection switching from said first subnet to said second subnet without receiving said FBAck message from said first access router and transmits an FNA message including said FBU message to said second access router;
a step in which said second access router confirms the validity of said address information included in said FNA message;
a step in which said second access routermakes a collation between said FBU message included in said FNA message and information on said FBAck message received from said first access router and stored; and
a step in which, when the information on said FBAckmessage corresponding to said FBU message included in said FNA message exists, said second access router forwards said packet, received from said first access router and buffered, to said mobile terminal.

2. The communication handover method according to claim 1, comprising:
a step in which said first access router transmits an HI message including said address information to said second access router after receiving said FBU message from saidmobile terminal; and
a step in which said second access router confirms the validity of said address information included in said HI message and then transmits, to said first access router, an HAck message for making a notification to the effect that said address information is valid.

3. A communication handover method, which is conducted when, in a communication system where a first access router pertaining to a first subnet and a second access router pertaining to a second subnet different from said first subnet are connected through an IP network, a mobile terminal connected through a radio communication to said first subnet makes connection switching from said first subnet to said second subnet, comprising:
a step in which said mobile terminal configures address information adaptable to said second subnet in a state connected to said first subnet;
a step in which said mobile terminal transmits an FBU message including said address information to said first access router;
a step in which said first access router receives said FBU message from said mobile terminal and then transmits an HI message including said address information to said second access router;
a step in which said second access router confirms the validity of said address information included in said HI message and then transmits, to said first access router, an HAck message for making a notification to the effect that said address information is valid;
a step in which said first access router transmits, to both said mobile terminal and said second access router, an FBAck message for making a notification to the effect that said address information is valid;
a step in which said second access router stores information on said FBAck message for making a notification to the effect that said address information received from said first access router is valid;
a step in which said first access router starts to forward a packet, addressed to said mobile terminal, to said second access router along with the transmission of said FBAck message;
a step in which said second access router buffers said packet addressed to said mobile terminal and received from said first access router;
a step in which said mobile terminal carries out L2 handover for making connection switching from said first subnet to said second subnet without receiving said FBAck message from said first access router and transmits an FNA message including said FBU message to said second access router;
a step in which said second access router makes a collation between said FBU message included in said FNA message and the information on said FBAck message received from said first access router and stored; and
a step in which, when the information on said FBAckmessage corresponding to said FBU message included in said FNA message exists, said second access router transmits said packet, received from said first access router and buffered, to said mobile terminal.

4. A communication handover method, which is conducted when, in a communication system where a first access router pertaining to a first subnet and a second access router pertaining to a second subnet different from said first subnet are connected through an IP network, a mobile terminal connected through a radio communication to said first subnet makes connection switching from said first subnet to said subnet, comprising:
a step in which said mobile terminal configures address information adaptable to said second subnet in a state connected to said first subnet;
a step in which said mobile terminal transmits an FBU message including said address information to said first access router;
a step in which said first access router receives said FBU message from said mobile terminal and then transmits an HI message including said address information to said second access router;
a step in which said second access router confirms the validity of said address information included in said HI message and then transmits, to said first access router, an HAck message for making a notification to the effect that said address information is valid;
a step in which said first access router transmits, to both said mobile terminal and said second access router, an FBAck message for making a notification to the effect that said address information is valid;
a step in which said second access router stores information on said FBAck message received from said first access router together with information indicative of whether or not said address information is valid;
a step in which said first access router starts to forward a packet, addressed to said mobile terminal, to said second access router along with the transmission of said FBAck message;
a step in which said second access router buffers said packet addressed to said mobile terminal and received from said first access router;
a step in which said mobile terminal carries out L2 handover for making connection switching from said first subnet to said second subnet without receiving said FBAck message from said first access router and transmits an FNA message including said FBU message to said second access router;
a step in which said second access router makes a collation between said FBU message included in said FNA message and the information on said FBAck message received from said first access router and stored; and
a step in which, when the information on said FBAckmessage corresponding to said FBU message included in said FNA message exists and the information indicative of said address information being valid is stored in conjunction with the information on said FBAck message, said second access router transmits said packet, received from said first access router and buffered, to said mobile terminal.

5. The communication handover method according to any one of claims 1 to 4, wherein information on a pair of transmitting side address and transmitted side address, specified at a header of said FBAck message, is used as the information on said FBAck message.

6. The communication handover method according to any one of claims 1 to 4, comprising a step in which said second access router deletes the information on said FBAck message collated with said FBU message included in said FNA message.

7. A communication system in which a first access router pertaining to a first subnet and a second access router pertaining to a second subnet different from said first subnet are connected through an IP network and a mobile terminal makes a connection with said first subnet or said second subnet through a radio communication,
wherein said mobile terminal configures address information adaptable to said second subnet in a state connected to said first subnet,
said mobile terminal transmits an FBU message including said address information to said first access router,
said first access router transmits, to both said mobile terminal and said second access router, an FBAck message for making a notification to the effect that said address information is valid,
said second access router stores information on said FBAck message received from said first access router,
said first access router starts to forward a packet, addressed to saidmobile terminal, to said second access router along with the transmission of said FBAck message,
said second access router buffers said packet addressed to said mobile terminal and received from said first access router,
said mobile terminal carries out L2 handover for making connection switching from said first subnet to said second subnet without receiving said FBAck message from said first access router and transmits an FNA message including said FBU message to said second access router,
said second access router confirms the validity of said address information included in said FNA message,
said second access router makes a collation between said FBU message included in said FNA message and the information on said FBAck message received from said first access router and stored, and
when the information on said FBAck message corresponding to said FBU message included in said FNA message exists, said second access router transmits said packet, received from said first access router and buffered, to said mobile terminal.

8. The communication system according to claim 7, wherein
said first access router transmits anHI message including said address information to said second access router after receiving said FBU message from said mobile terminal, and
said second access router confirms the validity of said address information included in said HI message and then transmits, to said first access router, an HAck message for making a notification to the effect that said address information is valid.

9. A communication system in which a first access router pertaining to a first subnet and a second access router pertaining to a second subnet different from said first subnet are connected through an IP network and a mobile terminal makes a connection with said first subnet or said second subnet through a radio communication,
wherein said mobile terminal configures address information adaptable to said second subnet in a state connected to said first subnet,
said mobile terminal transmits an FBU message including said address information to said first access router,
said first access router receives said FBU message from saidmobile terminal and then transmits an HI message including said address information to said second access router,
said second access router confirms the validity of said address information included in said HI message and then transmits, to said first access router, an HAck message for making a notification to the effect that said address information is valid,
said first access router transmits, to both said mobile terminal and said second access router, an FBAck message for making a notification to the effect that said address information is valid,
said second access router stores information on said FBAck message for making a notification to the effect that said address information received from said first access router is valid,
said first access router starts to forward a packet, addressed to said mobile terminal, to said second access router along with the transmission of said FBAck message,
said second access router buffers said packet addressed to said mobile terminal and received from said first access router,
said mobile terminal carries out L2 handover for making connection switching from said first subnet to said second subnet without receiving said FBAck message from said first access router and transmits an FNA message including said FBU message to said second access router,
said second access router makes a collation between said FBU message included in said FNA message and the information on said FBAck message received from said first access router and stored, and
when the information on said FBAck message corresponding to said FBU message included in said FNA message exists, said second access router transmits said packet, received from said first access router and buffered, to said mobile terminal.

10. A communication system in which a first access router pertaining to a first subnet and a second access router pertaining to a second subnet different from said first subnet are connected through an IP network and a mobile terminal makes a connection with said first subnet or said second subnet through a radio communication,
wherein said mobile terminal configures address information adaptable to said second subnet in a state connected to said first subnet,
said mobile terminal transmits an FBU message including said address information to said first access router,
said first access router receives said FBU message from saidmobile terminal and then transmits an HI message including said address information to said second access router,
said second access router confirms the validity of said address information included in said HI message and then transmits, to said first access router, an HAck message for making a notification to the effect that said address information is valid,
said first access router transmits, to both said mobile terminal and said second access router, an FBAck message for making a notification to the effect that said address information is valid,
said second access router stores information on said FBAck message received from said first access router together with information indicative of whether or not said address information is valid,
said first access router starts to forward a packet, addressed to said mobile terminal, to said second access router along with the transmission of said FBAck message,
said second access router buffers said packet addressed to said mobile terminal and received from said first access router,
said mobile terminal carries out L2 handover for making connection switching from said first subnet to said second subnet without receiving said FBAck message from said first access router and transmits an FNA message including said FBU message to said second access router,
said second access router makes a collation between said FBU message included in said FNA message and the information on said FBAck message received from the said access router and stored, and
when the information on said FBAck message corresponding to said FBU message included in said FNA message exists and the information indicative of said address information being valid is stored in conjunction with the information on said FBAckmessage, said second access router transmits saidpacket, received from said first access router and buffered, to said mobile terminal.

11. The communication system according to any one of claims 7 to 10, wherein information on a pair of transmitting side address and transmitted side address, specified at a header of said FBAck message, is used as the information on said FBAck message.

12. The communication system according to any one of claims 7 to 10, wherein said second access router deletes the information on said FBAck message collated with said FBU message included in said FNA message.

13. A communication message processing method, which is conducted in a second access router when, in a communication system where a first access router pertaining to a first subnet and said second access router pertaining to a second subnet different from said first subnet are connected through an IP network, a mobile terminal connected through a radio communication to said first subnet makes connection switching from said first subnet to said second subnet, comprising:
a step of receiving, from said first access router, an FBAck message which is a response message to an FBU message including address information configured by said mobile terminal and adaptable to said second subnet;
a step of storing information on said FBAck message received from said first access router;
a step of buffering a packet addressed to said mobile terminal and sent by packet forwarding to said mobile terminal which is started along with transmission of said FBAck message;
a step of receiving an FNA message including said FBU message from saidmobile terminal which carries out L2 handover for connection switching from said first subnet to said second subnet;
a step of confirming the validity of said address information in said FBU message included in said FNA message;
a step of making a collation between said FBU message included in said FNA message and the information on said FBAck message received from said first access router and stored; and
a step of, when the information on said FBAck message corresponding to said FBU message included in said FNA message exists, transmitting said packet, received from said first access router and buffered, to said mobile terminal.

14. The communication message processing method according to claim 13, comprising:
a step of receiving an HI message including said address information from said first access router; and
a step of confirming the validity of said address information included in said HI message and then transmitting, to said first access router, an HAck for making a notification to the effect that said address information is valid.

15. A communication message processing method, which is conducted in a second access router when, in a communication system where a first access router pertaining to a first subnet and said second access router pertaining to a second subnet different from said first subnet are connected through an IP network, a mobile terminal connected through a radio communication to said first subnet makes connection switching from said first subnet to said second subnet, comprising:
a step of receiving, from said first access router, an HI message including address information configured by said mobile terminal and adaptable to said second subnet;
a step of confirming the validity of said address information included in said HI message and then transmitting, to said first access router, an HAck message for making a notification to the effect that said address information is valid;
a step of receiving, from said first access router, an FBAck message which is a response to said FBU message;
a step of storing information on said FBAck message making a notification to the effect that said address information received from said first access router is valid;
a step of buffering a packet addressed to said mobile terminal and sent by said packet forwarding to said mobile terminal which is started along with transmission of said FBAck message;
a step of receiving an FNA message including said FBU message from said mobile terminal which carries out L2 handover for making connection switching from said first subnet to said second subnet;
a step of making a collation between said FBU message included in said FNA message and information on said FBAck message received from said first access router and stored; and
a step of, when the information on said FBAck message corresponding to said FBU message included in said FNA message exists, transmitting, to said mobile terminal, said packet received from said first access router and buffered.

16. A communication message processing method, which is conducted in a second access router when, in a communication system where a first access router pertaining to a first subnet and said second access router pertaining to a second subnet different from said first subnet are connected through an IP network, a mobile terminal connected through a radio communication to said first subnet makes connection switching from said first subnet to said second subnet, comprising:
a step of receiving, from said first access router, an HI message including address information configured by said mobile terminal and adaptable to said second subnet;
a step of confirming the validity of said address information included in said HI message and then transmitting, to said first access router, an HAck message for making a notification to the effect that said address information is valid;
a step of receiving, from said first access router, an FBAck message which is a response to said FBU message;
a step of storing information on said FBAck message received from said first access router together with information indicative of whether or not said address information is valid;
a step inwhich said first access router starts forwarding a packet, addressed to said mobile terminal, to said second access router along with transmission of said FBAck message;
a step in which said second access router buffers said packet addressed to said mobile terminal and received from said first access router;
a step of receiving an FNA message including said FBU message from said mobile terminal which carries out L2 handover for making connection switching from said first subnet to said second subnet;
a step of making a collation between said FBU message included in said FNA message and information on said FBAck message received from said first access router and stored; and
a step of, when the information on said FBAck message corresponding to said FBU message included in said FNA message exists and information indicative of said address information being valid is stored in conjunction with the information on said FBAck message, transmitting, to said mobile terminal, said packet received from said first access router and buffered.

17. The communication message processing method according to any one of claims 13 to 16, wherein information on a pair of transmitting side address and transmitted side address, specified at a header of said FBAck message, is used as the information on said FBAck message.

18. The communication message processing method according to any one of claims 13 to 16, comprising a step of deleting the information on said FBAck message collated with said FBU message included in said FNA message.

19. A communication message processing program for implementing said communication message processing method according to any one of claims 13 to 16 through the use of a computer.

## Amended claims

### Amended claims under Art. 19.1 PCT

1. Amended) A communication handover method, which is conducted when, in a communication system where a first access router pertaining to a first subnet and a second access router pertaining to a second subnet different from said first subnet are connected through an IP network, a mobile terminal connected through a radio communication to said first subnet makes connection switching from said first subnet to said second subnet, comprising:
a step in which said mobile terminal configures address information adaptable to said second subnet in a state connected to said first subnet;
a step in which said mobile terminal transmits an FBU message including said address information to said first access router;
a step in which said first access router transmits, to one of said mobile terminal and said second access router or both said mobile terminal and said second access router, an FBAck message for notifying a result of processing on said FBU message;
a step in which said second access router stores information on said FBAck message received from said first access router;
a step in which said first access router starts to forward a packet, addressed to said mobile terminal, to said second access router according to the processing on said FBU message;
a step in which said second access router buffers said packet addressed to said mobile terminal and received from said first access router;
a step in which said mobile terminal carries out L2 handover formaking connection switching from said first subnet to said second subnet without receiving said FBAck message from said first access router and transmits an FNA message including said FBU message to said second access router;
a step in which said second access router confirms the validity of said address information included in said FNA message;
a step in which said second access routermakes a collation between said FBU message included in said FNA message and information on said FBAck message received from said first access router and stored; and
a step in which, when the information on said FBAck message corresponding to said FBU message included in said FNA message and indicative of a result of the processing on said FBU message being normal exists, said second access router makes a selection so that said FBU message included in said FNAmessage is not transferred.

2. The communication handover method according to claim 1, comprising:
a step in which said first access router transmits an HI message including said address information to said second access router after receiving said FBU message from saidmobile terminal; and
a step in which said second access router confirms the validity of said address information included in said HI message and then transmits, to said first access router, an HAck message for making a notification to the effect that said address information is valid.

3. (Amended) A communication handover method, which is conducted when, in a communication system where a first access router pertaining to a first subnet and a second access router pertaining to a second subnet different from said first subnet are connected through an IP network, a mobile terminal connected through a radio communication to said first subnet makes connection switching from said first subnet to said second subnet, comprising:
a step in which said mobile terminal configures address information adaptable to said second subnet in a state connected to said first subnet;
a step in which said mobile terminal transmits an FBU message including said address information to said first access router;
a step in which said first access router receives said FBU message from said mobile terminal and then transmits an HI message including said address information to said second access router;
a step in which said second access router confirms the validity of said address information included in said HI message and then transmits, to said first access router, an HAck message for making a notification to the effect that said address information is valid;
a step in which said first access router transmits, to one of said mobile terminal and said second access router or both said mobile terminal and said second access router, an FBAck message for notifying a result of processing on said FBU message;
a step in which said second access router stores information on said FBAck message, received from said first access router, which notifies the processing result on said FBU message;
a step in which said first access router starts to forward a packet, addressed to said mobile terminal, to said second access router according to the processing on said FBU message;
a step in which said second access router buffers said packet addressed to said mobile terminal and received from said first access router;
a step in which said mobile terminal carries out L2 handover formaking connection switching fromsaid first subnet to said second subnet without receiving said FBAck message from said first access router and transmits an FNA message including said FBU message to said second access router;
a step in which said second access router makes a collation between said FBU message included in said FNA message and the information on said FBAck message received from said first access router and stored; and
a step in which, when the information on said FBAckmessage corresponding to said FBU message included in said FNA message and indicative of the processing result on said FBU message being normal exists, said second access router makes a selection so that said FBU message included in said FNA message is not transferred.

4. (Amended) A communication handover method, which is conducted when, in a communication system where a first access router pertaining to a first subnet and a second access router pertaining to a second subnet different from said first subnet are connected through an IP network, a mobile terminal connected through a radio communication to said first subnet makes connection switching from said first subnet to said second subnet, comprising:
a step in which said mobile terminal configures address information adaptable to said second subnet in a state connected to said first subnet;
a step in which said mobile terminal transmits an FBU message including saidaddress information to said first access router;
a step in which said first access router receives said FBU message from said mobile terminal and then transmits an HI message including said address information to said second access router;
a step in which said second access router confirms the validity of said address information included in said HI message and then transmits, to said first access router, an HAck message for making a notification to the effect that said address information is valid;
a step in which said first access router transmits, to one of said mobile terminal and said second access router or both said mobile terminal and said second access router, an FBAck message for notifying a result of processing on said FBU message;
a step in which said second access router stores information on said FBAck message received from said first access router together with information indicative of whether or not said address information is valid;
a step in which said first access router starts to forward a packet, addressed to said mobile terminal, to said second access router according to the processing on said FBU message;
a step in which said second access router buffers said packet addressed to said mobile terminal and received from said first access router;
a step in which said mobile terminal carries out L2 handover for making connection switching from said first subnet to said second subnet without receiving said FBAck message from said first access router and transmits an FNA message including said FBU message to said second access router;
a step in which said second access router makes a collation between said FBU message included in said FNA message and the information on said FBAck message received from said first access router and stored; and
a step in which, when the information on said FBAckmessage corresponding to said FBU message included in said FNA message and indicative of the processing result on said FBU message being normal exists and the information indicative of said address information being valid is stored in conjunction with the information on said FBAck message, said second access router makes a selection so that said FBU message included in said FNA message is not transferred.

5. The communication handover method according to any one of claims 1 to 4, wherein information on a pair of transmitting side address and transmitted side address, specified at a header of said FBAck message, is used as the information on said FBAck message.

6. The communication handover method according to any one of claims 1 to 4, comprising a step in which said second access router deletes the information on said FBAck message collated with said FBU message included in said FNA message.

7. (Amended) A communication system in which a first access router pertaining to a first subnet and a second access router pertaining to a second subnet different from said first subnet are connected through an IP network and a mobile terminal makes a connection with said first subnet or said second subnet through a radio communication,
wherein said mobile terminal configures address information adaptable to said second subnet in a state connected to said first subnet,
said mobile terminal transmits an FBU message including said address information to said first access router,
said first access router transmits, to one of said mobile terminal and said second access router or both said mobile terminal and said second access router, an FBAck message for notifying a result of processing on said FBU message,
said second access router stores information on said FBAck message received from said first access router,
said first access router starts to forward a packet, addressed to said mobile terminal, to said second access router according to the processing on said FBU message,
said second access router buffers said packet addressed to said mobile terminal and received from said first access router,
said mobile terminal carries out L2 handover for making connection switching from said first subnet to said second subnet without receiving said FBAck message from said first access router and transmits an FNA message including said FBU message to said second access router,
said second access router confirms the validity of said address information included in said FNA message,
said second access router makes a collation between said FBU message included in said FNA message and the information on said FBAck message received from said first access router and stored, and
when the information on said FBAck message corresponding to said FBU message included in said FNA message and indicative of the processing result on said FBUmessage being normal exists, said second access router makes a selection so that said FBU message included in said FNA message is not transferred.

8. The communication system according to claim 7, wherein
said first access router transmits an HI message including said address information to said second access router after receiving said FBU message from said mobile terminal, and
said second access router confirms the validity of said address information included in said HI message and then transmits, to said first access router, an HAck message for making a notification to the effect that said address information is valid.

9. (Amended) A communication system in which a first access router pertaining to a first subnet and a second access router pertaining to a second subnet different from said first subnet are connected through an IP network and a mobile terminal makes a connection with said first subnet or said second subnet through a radio communication,
wherein said mobile terminal configures address information adaptable to said second subnet in a state connected to said first subnet,
said mobile terminal transmits an FBU message including said address information to said first access router,
said first access router receives said FBU message from saidmobile terminal and then transmits an HI message including said address information to said second access router,
said second access router confirms the validity of said address information included in said HI message and then transmits, to said first access router, an HAck message for making a notification to the effect that said address information is valid,
said first access router transmits, to one of said mobile terminal and said second access router or both said mobile terminal and said second access router, an FBAck message for notifying a result of processing on said FBU message,
said second access router stores information on said FBAck message, received from said first access router, which notifies the processing result on said FBU message,
said first access router starts to forward a packet, addressed to saidmobile terminal, to said second access router according to the processing on said FBU message,
said second access router buffers said packet addressed to said mobile terminal and received from said first access router,
said mobile terminal carries out L2 handover for making connection switching from said first subnet to said second subnet without receiving said FBAck message from said first access router and transmits an FNA message including said FBU message to said second access router,
said second access router makes a collation between said FBU message included in said FNA message and the information on said FBAck message received from said first access router and stored, and
when the information on said FBAck message corresponding to said FBU message included in said FNAmessage and indicative of the processing result on said FBU message being normal exists, said second access router makes a selection so that said FBU message included in said FNA message is not transferred.

10. (Amended) A communication system in which a first access router pertaining to a first subnet and a second access router pertaining to a second subnet different from said first subnet are connected through an IP network and a mobile terminal makes a connection with said first subnet or said second subnet through a radio communication,
wherein said mobile terminal configures address information adaptable to said second subnet in a state connected to said first subnet,
said mobile terminal transmits an FBU message including said address information to said first access router,
said first access router receives said FBU message from saidmobile terminal and then transmits an HI message including said address information to said second access router,
said second access router confirms the validity of said address information included in said HI message and then transmits, to said first access router, an HAck message for making a notification to the effect that said address information is valid,
said first access router transmits, to one of said mobile terminal and said second access router or both said mobile terminal and said second access router, an FBAck message for notifying a result of processing on said FBU message,
said second access router stores information on said FBAck message received from said first access router together with information indicative of whether or not said address information is valid,
said first access router starts to forward a packet, addressed to said mobile terminal, to said second access router according to the processing on said FBU message,
said second access router buffers said packet addressed to said mobile terminal and received from said first access router,
said mobile terminal carries out L2 handover for making connection switching from said first subnet to said second subnet without receiving said FBAck message from said first access router and transmits an FNA message including said FBU message to said second access router,
said second access router makes a collation between said FBU message included in said FNA message and the information on said FBAck message received from the said access router and stored, and
when the information on said FBAck message corresponding to said FBU message included in said FNA message and indicative of the processing result on said FBU message exists and the information indicative of said address information being valid is stored in conjunction with the information on said FBAck message, said second access router makes a selection so that said FBU message included in said FNA message is not transferred.

11. The communication system according to any one of claims 7 to 10, wherein information on a pair of transmitting side address and transmitted side address, specified at a header of said FBAck message, is used as the information on said FBAck message.

12. The communication system according to any one of claims 7 to 10, wherein said second access router deletes the information on said FBAck message collated with said FBU message included in said FNA message.

13. (Amended) A communication message processing method, which is conducted in a second access router when, in a communication system where a first access router pertaining to a first subnet and said second access router pertaining to a second subnet different from said first subnet are connected through an IP network, a mobile terminal connected through a radio communication to said first subnet makes connection switching from said first subnet to said second subnet, comprising:
a step of receiving, from said first access router, an FBAck message which is a response message to an FBU message including address information configured by said mobile terminal and adaptable to said second subnet;
a step of storing information on said FBAck message received from said first access router;
a step of buffering a packet addressed to said mobile terminal and sent by packet forwarding to said mobile terminal which is started in accordance with processing on said FBU message;
a step of receiving an FNA message including said FBU message from said mobile terminal which carries out L2 handover for connection switching from said first subnet to said second subnet;
a step of confirming the validity of said address information included in said FNA message;
a step of making a collation between said FBU message included in said FNA message and the information on said FBAck message received from said first access router and stored; and
a step of, when the information on said FBAck message corresponding to said FBU message included in said FNA message and indicative of a result of the processing on said FBU message being normal exists, making a selection so that said FBU message included in said FNA message is not transferred.

14. The communication message processing method according to claim 13, comprising:
a step of receiving an HI message including said address information from said first access router; and
a step of confirming the validity of said address information included in said HI message and then transmitting, to said first access router, an HAck for making a notification to the effect that said address information is valid.

15. (Amended) A communication message processing method, which is conducted in a second access router when, in a communication system where a first access router pertaining to a first subnet and said second access router pertaining to a second subnet different from said first subnet are connected through an IP network, a mobile terminal connected through a radio communication to said first subnet makes connection switching from said first subnet to said second subnet, comprising:
a step of receiving, from said first access router, an HI message including address information configured by said mobile terminal and adaptable to said second subnet;
a step of confirming the validity of said address information included in said HI message and then transmitting, to said first access router, an HAck message for making a notification to the effect that said address information is valid;
a step of receiving, from said first access router, an FBAck message which is a response to said FBU message;
a step of storing information on said FBAck message, received from said first access router, which notifies a result of processing on said FBU message;
a step of buffering a packet addressed to said mobile terminal and sent by forwarding said packet to said mobile terminal which is started in accordance with the processing on said FBU message;
a step of receiving an FNA message including said FBU message from saidmobile terminal which carries out L2 handover for making connection switching from said first subnet to said second subnet;
a step of making a collation between said FBU message included in said FNA message and information on said FBAck message received from said first access router and stored; and
a step of, when the information on said FBAck message corresponding to said FBU message included in said FNA message and indicative of the processing result on said FBU message being normal exists, making a selection so that said FBU message included in said FNA message is not transferred.

16. (Amended) A communication message processing method, which is conducted in a second access router when, in a communication system where a first access router pertaining to a first subnet and said second access router pertaining to a second subnet different from said first subnet are connected through an IP network, a mobile terminal connected through a radio communication to said first subnet makes connection switching from said first subnet to said second subnet, comprising:
a step of receiving, from said first access router, an HI message including address information configured by said mobile terminal and adaptable to said second subnet;
a step of confirming the validity of said address information included in said HI message and then transmitting, to said first access router, an HAck message for making a notification to the effect that said address information is valid;
a step of receiving, from said first access router, an FBAck message which is a response to said FBU message;
a step of storing information on said FBAck message received from said first access router together with information indicative of whether or not said address information is valid;
a step inwhich said first access router starts forwarding a packet, addressed to said mobile terminal, to said second access router according to processing on said FBU message;
a step in which said second access router buffers said packet addressed to said mobile terminal and received from said first access router;
a step of receiving an FNA message including said FBU message from saidmobile terminal which carries out L2 handover for making connection switching from said first subnet to said second subnet;
a step of making a collation between said FBU message included in said FNA message and information on said FBAck message received from said first access router and stored; and
a step of, when the information on said FBAck message corresponding to said FBU message included in said FNA message and indicative of a result of the processing on said FBU message being normal exists and information indicative of said address information being valid is stored in conjunction with the information on said FBAck message, making a selection so that said FBU message included in said FNA message is not transferred.

17. The communication message processing method according to any one of claims 13 to 16, wherein information on a pair of transmitting side address and transmitted side address, specified at a header of said FBAck message, is used as the information on said FBAck message.

18. The communication message processing method according to any one of claims 13 to 16, comprising a step of deleting the information on said FBAck message collated with said FBU message included in said FNA message.

19. A communication message processing program for implementing said communication message processing method according to any one of claims 13 to 16 through the use of a computer.

Statement under Art. 19.1 PCT
1. Claims 1, 3, 4, 7, 9, 10, 13, 15 and 16 have been amended.

2. The other claims are not amended.
